# EUROPÄISCHE PATENTANMELDUNG

(11) **EP 3 168 150 A1**
(43) Veröffentlichungstag der Anmeldung: **17.05.2017**
(21) Anmeldenummer: 16197923.2
(22) Anmeldetag: 09.11.2016
(51) Int. Cl.: B64C 39/02

(54) **HILFSTRAGFLÜGELEINRICHTUNG**

(30) Priorität: 10.11.2015 DE 102015014502
(71) Anmelder: MBDA Deutschland GmbH, 86529 Schrobenhausen (DE)
(72) Erfinder: Maier, Franz, 83075 Bad Feilnbach, Au (DE)
(74) Vertreter: Isarpatent

(57) **Zusammenfassung**

Eine Hilfstragflügeleinrichtung zur Verwendung mit einem unbemannten Flugkörper (1), der einen Rumpf (10) mit einem Feststoffantrieb (11) sowie am Rumpf (10) angeordnete Flügel (12, 13, 14, 15) und Steuerflächen (16, 17, 18, 19) aufweist, zeichnet sich dadurch aus, dass die Hilfstragflügeleinrichtung (2; 102) zumindest eine aerodynamischen Auftrieb erzeugende Tragfläche (23, 24; 121, 122, 123, 124) aufweist und dass die Hilfstragflügeleinrichtung (2) einen Rumpfadapter (20; 120) aufweist, der zur Aufnahme zumindest eines Abschnitts des Rumpfs (10) des unbemannten Flugkörpers (1) oder eines Abschnitts eines den Flugkörper (1) aufnehmenden Startrohrs (100) für den Flugkörper (1) ausgebildet ist.

## Beschreibung

### TECHNISCHES GEBIET

Die vorliegende Erfindung betrifft eine Hilfstragflügeleinrichtung zur Verwendung mit einem unbemannten Flugkörper nach dem Oberbegriff des Patentanspruchs 1 sowie ein mit einem Flugkörper und dieser Hilfstragflügeleinrichtung ausgestattetes Fluggerät.

### HINTERGRUND DER ERFINDUNG

Tragbare Boden-Boden-Flugkörper mit Feststoffantrieb, die von Infanterie und Spezialkräften eingesetzt werden, haben nur eine sehr geringe Reichweite von wenigen Kilometern. Soll die Reichweite gesteigert werden, so könnte ein größeres Feststofftriebwerk vorgesehen werden, wodurch allerdings die Größe und das Gewicht des Flugkörpers anstiege. Die maximale Reichweite von derartigen tragbaren Boden-Boden-Flugkörpern ist daher bei vertretbarem Gewicht stark eingeschränkt.

### DARSTELLUNG DER ERFINDUNG

Aufgabe der vorliegenden Erfindung ist es daher, eine Verbesserung für einen tragbaren unbemannten Flugkörper anzugeben, mit der der Flugkörper trotz eines Feststoffantriebs bei geringem Eigengewicht eine erhöhte Reichweite erzielt.

Diese Aufgabe wird gelöst durch die Hilfstragflügeleinrichtung mit den Merkmalen des Anspruchs 1.

Diese erfindungsgemäße Hilfstragflügeleinrichtung zur Verwendung mit einem unbemannten Flugkörper, der einen Rumpf mit einem Feststoffantrieb sowie am Rumpf angeordnete Flügel und Steuerflächen aufweist, zeichnet sich dadurch aus, dass die Hilfstragflügeleinrichtung zumindest eine aerodynamischen Auftrieb erzeugende Tragfläche aufweist und dass die Hilfstragflügeleinrichtung einen Rumpfadapter aufweist, der zur Aufnahme zumindest eines Abschnitts des Rumpfs des unbemannten Flugkörpers oder eines Abschnitts eines den Flugkörper aufnehmenden Startrohrs für den Flugkörper ausgebildet ist.

### VORTEILE

Die Hilfstragflügeleinrichtung, die mit dem Rumpfadapter am Rumpf des Flugkörpers anbringbar ist, verleiht dem Flugkörper aerodynamische Flugfähigkeiten und verbessert so die Reichweite des Flugkörpers.

Weitere bevorzugte und vorteilhafte Ausgestaltungsmerkmale der erfindungsgemäßen Hilfstragflügeleinrichtung sind Gegenstand der Unteransprüche 2 bis 12.

Vorzugsweise ist der Rumpfadapter mit einem Abschnitt des Rumpfs verbindbar.

Vorzugsweise weist die Hilfstragflügeleinrichtung zumindest eine Backbord-Tragfläche und zumindest eine Steuerbord-Tragfläche aufweist, die jeweils mit dem Rumpfadapter verbunden oder verbindbar sind. Diese Hilfstragflügeleinrichtung ist sehr kompakt zusammenlegbar und daher besonders für den Infanterieeinsatz geeignet.

Vorzugsweise ist der Rumpfadapter zweiteilig ausgebildet, wobei ein erster Teil mit der zumindest einen Backbord-Tragfläche verbunden oder verbindbar ist und wobei ein zweiter Teil mit der zumindest einen Steuerbord-Tragfläche verbunden oder verbindbar ist, und die beiden Teile des Rumpfadapters sind zur Einspannung des Rumpfs des Flugkörpers miteinander verbindbar. Diese Ausgestaltung ermöglicht es, die Hilfstragflächeneinrichtung schnell und ohne aufwändige Montage am Flugkörper anzubringen, indem der Rumpfadapter den Rumpf zwischen den beiden Adapterteilen einspannt.

In einer alternativen bevorzugten Ausgestaltung ist der Rumpfadapter als Startvorrichtung für den Flugkörper ausgebildet. Dabei ist es von Vorteil, wenn der Rumpfadapter ein Startrohr aufweist oder mit einem Stahlrohr verbunden oder verbindbar ist, in welches der Flugkörper einsetzbar ist. Besonders vorteilhaft ist es, wenn das oben erwähnte Startrohr das bereits zusammen mit dem Flugkörper vorhandene Transport- und Startrohr des Flugkörpers ist.

Weist die Hilfstragflügeleinrichtung eine obere Backbord-Tragfläche und eine untere Backbord-Tragfläche sowie eine obere Steuerbord-Tragfläche und eine untere Steuerbord-Tragfläche auf, die jeweils mit dem Rumpfadapter verbunden oder verbindbar sind, so wird eine Doppeldecker-Tragflügelanordnung geschaffen, die die aerodynamischen Eigenschaften bei kompaktem Aufbau besonders verbessert.

Vorteilhaft ist es auch, wenn die freien Enden der Backbord-Tragflächen über zumindest eine Backbord-Verbindungsfläche miteinander verbunden oder verbindbar sind und wenn die freien Enden der Steuerbord-Tragflächen über zumindest eine Steuerbord-Verbindungsfläche miteinander verbunden oder verbindbar sind. Hierdurch wird ein besonders stabiles Doppeldecker-Kastenprofil der Tragflügeleinrichtung geschaffen, das nicht nur Gewichtseinsparungen ermöglicht, sondern auch den induzierten Widerstand reduziert.

Besonders vorteilhaft ist es, wenn die Hilfstragflügeleinrichtung zumindest eine Propeller-Antriebseinrichtung aufweist. Dadurch erhält der mit der Hilfstragflügeleinrichtung versehene Flugkörper nicht nur verbessere aerodynamische Eigenschaften, sondern noch zusätzlich einen Antrieb zur Erzielung großer Reichweiten im Marschflug.

Vorzugsweise ist eine erste, backbordseitige Propeller-Antriebseinrichtung mit der Backbord-Tragfläche oder der Backbord-Verbindungsfläche verbunden oder verbindbar und eine zweite, steuerbordseitige Propeller-Antriebseinrichtung ist mit der Steuerbord-Tragfläche oder der Steuerbord-Verbindungsfläche verbunden oder verbindbar. Dadurch werden die Reichweite und die Steuerungsmöglichkeiten des Flugkörpers weiter verbessert.

Dabei ist es für die Steuerbarkeit besonders von Vorteil, wenn die Tragflächen am Rumpfadapter um eine zur Gierachse parallele Tragflächenschwenkachse schwenkbar angeordnet sind.

Besonders kompakt zusammenlegbar ist eine vormontierte Einheit aus Flugkörper und Hilfstragflächeneinrichtung dann, wenn die jeweilige obere Tragfläche an einer Oberseite des Rumpfadapters schwenkbar gelagert ist und wenn die jeweilige untere Tragfläche an einer Unterseite des Rumpfadapters schwenkbar gelagert ist.

Die Erfindung ist weiterhin gerichtet auf ein einen Flugkörper mit einer erfindungsgemäß ausgestalteten Hilfstragflügeleinrichtung aufweisendes Fluggerät.

Die erfindungsgemäße Hilfstragflügeleinrichtung bildet in einer besonders bevorzugten Variante eine Vorrichtung bestehend aus Tragflügeln mit Steuerrudern, Elektroantrieb mit Propellern und Akkus zur Stromversorgung, welche einem vorhandenen Boden-Boden-Flugkörper "umgeschnallt", also mit wenigen Handgriffen und möglichst ohne Werkzeug am Rumpf des Flugkörpers angebracht werden kann.

Alternativ kann die Hilfstragflügeleinrichtung als Rumpfadapter ein Startgerät, zum Beispiel ein Startrohr, aufweisen, aus dem der Flugkörper während des aerodynamischen Tragflugs durch Zündung des Feststoffantriebs heraus gestartet werden kann. Die Hilfstragflügeleinrichtung kann dann autonom zum Startort zurückkehren.

Diese Vorrichtungen kommen ohne eigene Sensoren und eigene Intelligenz aus, wenn die Steuerkommandos für die Marschphase über eine elektrische Schnittstelle vom zu transportierenden Flugkörper kommen können, wozu eine, beispielsweise steckbare, elektrische Steuersignalverbindung zwischen dem Flugkörper und der Hilfstragflügeleinrichtung vorgesehen ist. Dadurch können die Herstellungskosten extrem gering gehalten werden.

Durch die Ausrüstung eines Flugkörpers mit der erfindungsgemäßen Hilfstragflügeleinrichtung werden die nachstehend aufgeführten Vorteile erzielt:
- deutliche flugmechanische Reichweitensteigerung
- Loiterfähigkeit (Beobachtungsmodus)
- Eigenstartfähigkeit mittels einfacher Rampe
- sehr geringe Herstellungskosten
- im zerlegten Zustand geringes Packmaß.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine perspektivische Ansicht eines mit einer erfindungsgemäßen Hilfstragflügeleinrichtung versehenen Flugkörpers;
- Fig. 2: eine Explosionsdarstellung der Anordnung aus Fig. 1;
- Fig. 3: eine alternative Ausführungsform einer Hilfstragflügeleinrichtung gemäß der Erfindung; und
- Fig. 4: die alternative Ausführungsform aus Fig. 3 im zusammengeklappten Transportzustand.

### DARSTELLUNG VON BEVORZUGTEN AUSFÜHRUNGSBEISPIELEN

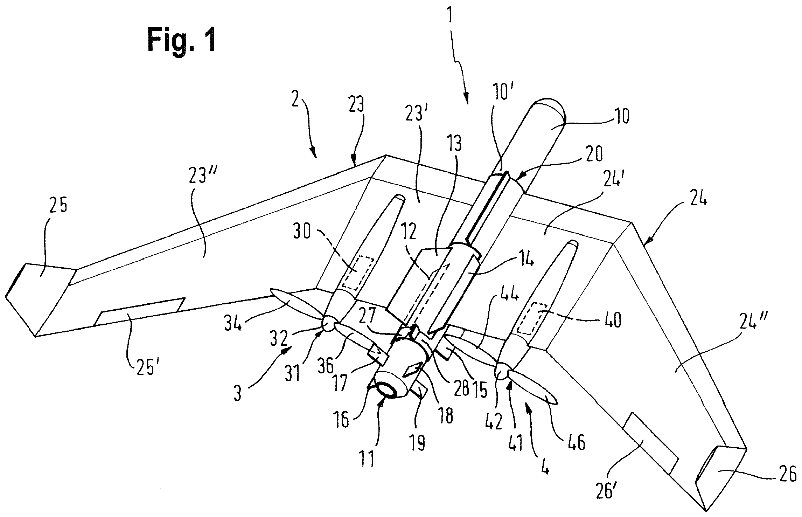

In Fig. 1 ist ein unbemannter Flugkörper 1 gezeigt, der einen Rumpf 10, einen im Heck des Rumpfs 10 vorgesehenen Feststoffantrieb 11 sowie im Bereich des Hecks am Rumpf 10 angeordnete Flügel 12, 13, 14, 15 und Steuerflächen 16, 17, 18, 19 aufweist.

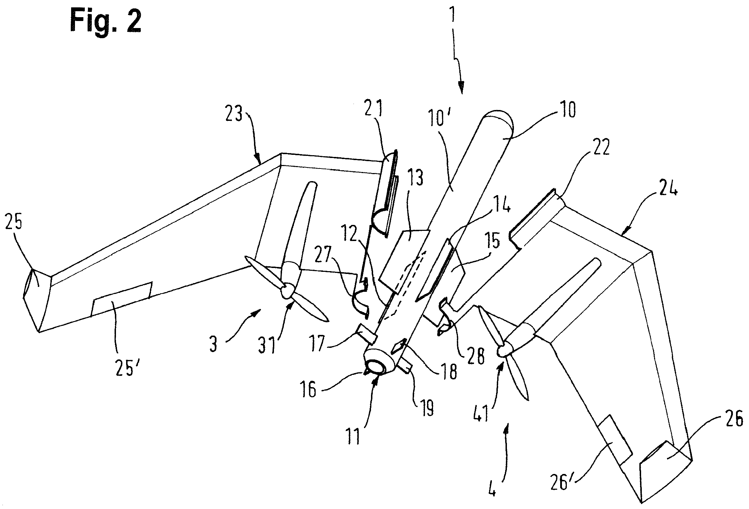

Am Rumpf 10 des Flugkörpers 1 ist im Bereich der Rumpfmitte vor den Flügeln 12, 13, 14, 15 ein Rumpfadapter 20 einer Hilfstragflügeleinrichtung 2 am Rumpf 10 angebracht. Der Rumpfadapter 20 umgreift einen mittleren Umfangsabschnitt 10' des Rumpfs 10, wobei der Rumpfadapter 20, wie in Fig. 2 zu erkennen ist, zwei vordere Adapterhälften 21, 22 aufweist, die zum festen Umschließen des mittleren Rumpfabschnitts miteinander verspannt sind. Des Weiteren ist am rückwärtigen Ende der rumpfnahen Tragflächenabschnitte 23', 24' jeweils eine Adapterhälfte 27, 28 vorgesehen, die gemeinsam den Heckabschnitt 11 des Rumpfs 10 umschließen und wie die vorderen Adapterhälften 21, 22 auch miteinander verspannt sind.

Jede der beiden vorderen Hälften 21, 22 des Rumpfadapters 20 ist an einem inneren Ende einer Tragfläche 23 beziehungsweise 24 angeordnet. Die jeweilige Tragfläche 23, 24 erstreckt sich zunächst vom Rumpfadapter 20 in etwa in einem rechten Winkel zur Seite, um dort einen rumpfnahen Tragflächenabschnitt 23', 24' zu bilden, und geht dann in einen rückwärts gepfeilten äußeren Tragflächenabschnitt 23", 24" über. An dem vom Rumpfadapter 20 abgewandten freien Ende der jeweiligen Tragfläche 23, 24 ist ein sich vom Tragflächenende nach oben erstreckendes Winglet 25 beziehungsweise 26 vorgesehen. Sowohl die backbordseitige Tragfläche 23 als auch die steuerbordseitige Tragfläche 24 sind an ihrer hinteren Kante mit einem Ruder 25', 26' versehen, das die Funktionen eines Höhenruders und eines Querruders in sich vereint.

Jede der beiden Tragflächen 23, 24 ist in ihrem dem Rumpfadapter 20 benachbarten rumpfnahen Tragflächenabschnitt 23', 24' mit einer Antriebseinrichtung 3, 4 versehen. Diese Antriebseinrichtungen 3, 4 sind als Propeller-Antriebseinrichtungen ausgebildet und weisen beispielsweise jeweils einen in der zugeordneten Tragfläche 23, 24 vorgesehenen Elektromotor 30, 40 als Antrieb auf, der jeweils eine (nicht gezeigte) Antriebswelle in Rotation versetzt, die an ihrem freien Ende mit einer Propellernabe 32, 42 verbunden ist. An der Propellernabe 32, 42 sind jeweils zwei oder mehr Propellerblätter 34, 36 beziehungsweise 44, 46 angebracht, so dass auf diese Weise jeweils ein Propeller 31 beziehungsweise 41 gebildet ist. Die beiden Propeller 31, 41 liegen an der in Flugrichtung gesehen rückwärtigen Seite der Tragflächen 23, 24 zwischen den Flügeln 12, 13, 14, 15 und den Steuerflächen 16, 17, 18, 19 des Flugkörpers 1 und sind somit als Schub-Propeller ausgebildet, die die Steuerflächen 16, 17, 18, 19 anströmen. Eine elektrische Stromversorgungseinheit, beispielsweise eine Batterie, ist in der zugeordneten Tragfläche 23, 24 untergebracht.

Mittels der am Flugkörper 1 angebrachten Hilfstragflügeleinrichtung 2 mit ihren Propeller-Antriebseinrichtungen 3, 4 ist es möglich, den Flugkörper 1 im aerodynamischen Tragflug über eine größere Distanz zu einem potentiellen Zielgebiet hin zu fliegen und dort durch Öffnen der Verbindungen des geteilten Rumpfadapters 20, beispielsweise durch Aufsprengen, die Tragflächen 23, 24 vom unbemannten Flugkörper 1 abzustoßen, woraufhin der Flugkörper 1 mit seinem erst zu diesem Zeitpunkt gezündeten Feststoffantrieb in herkömmlicher Weise das Ziel anfliegt.

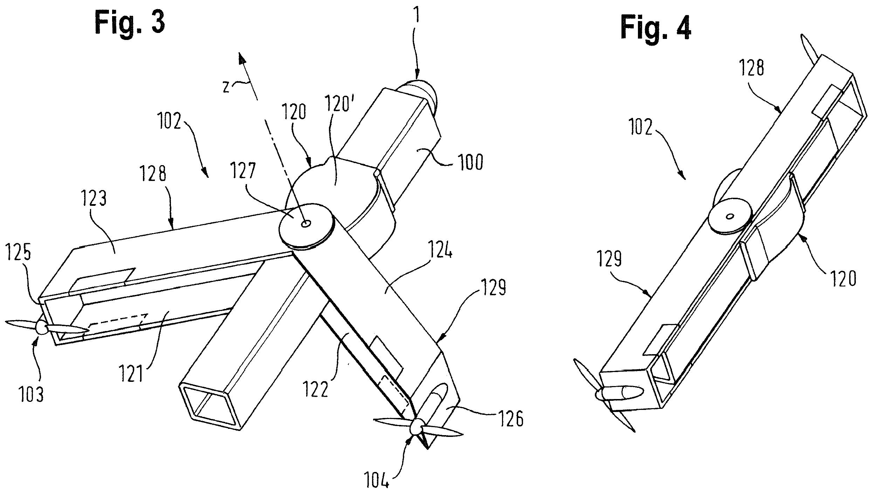

In Fig. 3 ist eine alternative Ausführungsform der Hilfstragflügeleinrichtung dargestellt, bei welcher die Hilfstragflügeleinrichtung 102 nach Art eines Doppeldeckers ausgebildet ist und dazu eine untere Backbord-Tragfläche 121 sowie eine obere Backbord-Tragfläche 123 und eine untere Steuerbord-Tragfläche 122 und eine obere Steuerbord-Tragfläche 124 aufweist. Die beiden Backbord-Tragflächen sind mittels einer sich vom freien Ende der oberen Backbord-Tragfläche 123 zum freien Ende der unteren Backbord-Tragfläche 121 im Wesentlichen senkrecht erstreckenden Backbord-Verbindungsfläche 125 miteinander zu einem Kastenprofil verbunden. Auch die beiden Steuerbord-Tragflächen 122, 124 sind mittels einer sich vom freien Ende der oberen Steuerbord-Tragfläche 124 nach unten zum freien Ende der unteren Steuerbord-Tragfläche 122 im Wesentlichen senkrecht erstreckenden Steuerbord-Verbindungsfläche 126 miteinander zu einem Kastenprofil verbunden.

Analog zum Ausführungsbeispiel der Fig. 1 ist hier die jeweilige obere Tragfläche 123, 124 mit einem Ruder 125', 126' versehen. Alternativ oder zusätzlich kann auch die jeweilige untere Tragfläche 121, 122 mit einem Ruder 125", 126" versehen sein.

Die beiden oberen Tragflächen 123, 124 sind mit ihrem rumpfseitigen Ende an einem an der Oberseite des Rumpfadapters 120 gelegenen oberen Schwenkgelenk 127 relativ zueinander schwenkbar am Rumpfadapter 120 gelagert. Auf die gleiche Weise sind die beiden unteren Tragflächen 121, 122 mit einem (nicht gezeigten) unteren Schwenkgelenk relativ zueinander und relativ zum Rumpfadapter 120 an diesem verschwenkbar gelagert.

Der Rumpfadapter 120 weist einen Startrohradapter 120' auf, der mit den Schwenkgelenken 122, 127 und den Tragflächen 121, 122, 123, 124 versehen ist. Der Startrohradapter 120' bildet ein kastenförmiges Rohr zur Aufnahme des Startrohrs 100 für den Flugkörper, aus welchem der Flugkörper nach dem Zünden seines Feststofftriebwerks verschossen werden kann.

Der Startrohradapter 120' besitzt einen offenen Innenquerschnitt, in welchem ein mit dem Flugkörper 1 mitgeliefertes Transport- und Startrohr aufgenommen werden kann.

In Fig. 3 ist auch zu erkennen, dass die Propeller-Antriebseinrichtungen 103, 104 jeweils an einer der Verbindungsflächen 125, 126 als Druckpropellerantriebe angebracht sind.

Durch die kastenförmige Ausgestaltung der backbordseitigen und der steuerbordseitigen Tragflächenanordnungen 128, 129 wird der aerodynamische Auftrieb und damit die Tragfähigkeit der Hilfstragflügeleinrichtung 102 gegenüber einem Eindecker mit demselben Tragflächengrundriss deutlich verbessert.

Für den Transport der in Fig. 3 gezeigten Hilfstragflügeleinrichtung 102 können die beiden Tragflächenanordnungen 128, 129 so verschwenkt werden, dass sie sich in Richtung der Längserstreckung des Rumpfadapters 120 an diesen anlegen. Der Abstand von der Schwenkachse Z des Schwenklagers 127, die parallel zur Gierachse z der Hilfstragflügeleinrichtung 102 verläuft, bis zur jeweiligen Verbindungsfläche 125 beziehungsweise 126 ist größer als die halbe Längserstreckung des Rumpfadapters 120, so dass die gesamte Hilfstragflügeleinrichtung 102 in die in Fig. 4 gezeigte kompakte Transportstellung gebracht werden kann, in welcher sie beispielsweise in einem Rucksack eines Infanteriesoldaten untergebracht werden kann.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Flugkörper
- 2: Hilfstragflügeleinrichtung
- 3: Antriebseinrichtung
- 4: Antriebseinrichtung
- 10: Rumpf
- 10': mittlerer Umfangsabschnitt
- 11: Feststoffantrieb
- 12: Flügel
- 13: Flügel
- 14: Flügel
- 15: Flügel
- 16: Steuerfläche
- 17: Steuerfläche
- 18: Steuerfläche
- 19: Steuerfläche
- 20: Rumpfadapter
- 21: vordere Adapterhälfte
- 22: vordere Adapterhälfte
- 23: Tragfläche
- 23': rumpfnaher Tragflächenabschnitt
- 23": äußerer Tragflächenabschnitt
- 24: Tragfläche
- 24': rumpfnaher Tragflächenabschnitt
- 24": äußerer Tragflächenabschnitt
- 25: Winglet
- 26: Winglet
- 27: hintere Adapterhälfte
- 28: hintere Adapterhälfte
- 30: Elektromotor
- 31: Propeller
- 32: Propellernabe
- 34: Propellerblatt
- 36: Propellerblatt
- 40: Elektromotor
- 41: Propeller
- 42: Propellernabe
- 44: Propellerblatt
- 46: Propellerblatt
- 100: Startrohr
- 102: Hilfstragflügeleinrichtung
- 103: Propeller-Antriebseinrichtung
- 104: Propeller-Antriebseinrichtung
- 120: Rumpfadapter
- 120': Startrohradapter
- 121: untere Backbord-Tragfläche
- 122: untere Steuerbord-Tragfläche
- 123: obere Backbord-Tragfläche
- 124: obere Steuerbord-Tragfläche
- 125: Backbord-Verbindungsfläche
- 126: Steuerbord-Verbindungsfläche
- 127: oberes Schwenkgelenk
- 128: backbordseitige Tragflächenanordnung
- 129: steuerbordseitige Tragflächenanordnung
- Z: Schwenkachse
- z: Gierachse

## Patentansprüche

1. Hilfstragflügeleinrichtung zur Verwendung mit einem unbemannten Flugkörper (1), der einen Rumpf (10) mit einem Feststoffantrieb (11) sowie am Rumpf (10) angeordnete Flügel 12, 13, 14, 15 und Steuerflächen (16, 17, 18, 19) aufweist;
**dadurch gekennzeichnet,**
**dass** die Hilfstragflügeleinrichtung (2; 102) zumindest eine aerodynamischen Auftrieb erzeugende Tragfläche (23, 24; 121, 122, 123, 124) aufweist und dass die Hilfstragflügeleinrichtung (2) einen Rumpfadapter (20; 120) aufweist, der zur Aufnahme zumindest eines Abschnitts des Rumpfs (10) des unbemannten Flugkörpers (1) oder eines Abschnitts eines den Flugkörper (1) aufnehmenden Startrohrs (100) für den Flugkörper (1) ausgebildet ist.

2. Hilfstragflügeleinrichtung nach Anspruch 1,
**dadurch gekennzeichnet,**
**dass** der Rumpfadapter (20) mit einem Abschnitt (10') des Rumpfs (10) verbindbar ist.

3. Hilfstragflügeleinrichtung nach Anspruch 1 oder 2,
**dadurch gekennzeichnet,**
**dass** die Hilfstragflügeleinrichtung (2; 102) zumindest eine Backbord-Tragfläche (23; 121, 123) und zumindest eine Steuerbord-Tragfläche (24; 122, 124) aufweist, die jeweils mit dem Rumpfadapter (20; 120) verbunden oder verbindbar sind.

4. Hilfstragflügeleinrichtung nach einem der vorhergehenden Ansprüche,
**dadurch gekennzeichnet,**
**dass** der Rumpfadapter (20) zweiteilig ausgebildet ist, wobei ein erster Teil (21, 27) mit der zumindest einen Backbord-Tragfläche (23) verbunden oder verbindbar ist und wobei ein zweiter Teil (22, 28) mit der zumindest einen Steuerbord-Tragfläche (24) verbunden oder verbindbar ist, und
**dass** die beiden Teile (21, 22; 27, 28) des Rumpfadapters (20) zur Einspannung des Rumpfs (10) des Flugkörpers (1) miteinander verbindbar sind.

5. Hilfstragflügeleinrichtung nach einem der Ansprüche 1 bis 3,
**dadurch gekennzeichnet,**
**dass** der Rumpfadapter (120) als Startvorrichtung für den Flugkörper (1) ausgebildet ist.

6. Hilfstragflügeleinrichtung nach Anspruch 5,
**dadurch gekennzeichnet,**
**dass** der Rumpfadapter (120) ein Startrohr aufweist oder mit einem Startrohr (100) verbunden oder verbindbar ist, in welches der Flugkörper (1) einsetzbar ist.

7. Hilfstragflügeleinrichtung nach einem der vorhergehenden Ansprüche
**dadurch gekennzeichnet,**
**dass** die Hilfstragflügeleinrichtung (102) eine obere Backbord-Tragfläche (123) und eine untere Backbord-Tragfläche (121) sowie eine obere Steuerbord-Tragfläche (124) und eine untere Steuerbord-Tragfläche (122) aufweist, die jeweils mit dem Rumpfadapter (120) verbunden oder verbindbar sind und eine Doppeldecker-Tragflügelanordnung bilden.

8. Hilfstragflügeleinrichtung nach Anspruch 7,
**dadurch gekennzeichnet,**
**dass** die freien Enden der Backbord-Tragflächen (121, 123) über zumindest eine Backbord-Verbindungsfläche (125) miteinander verbunden oder verbindbar sind und
**dass** die freien Enden der Steuerbord-Tragflächen (122, 124) über zumindest eine Steuerbord-Verbindungsfläche (126) miteinander verbunden oder verbindbar sind.

9. Hilfstragflügeleinrichtung nach einem der vorhergehenden Ansprüche,
**dadurch gekennzeichnet,**
**dass** die Hilfstragflügeleinrichtung (2; 102) zumindest eine Propeller-Antriebseinrichtung (3, 4; 103, 104) aufweist.

10. Hilfstragflügeleinrichtung nach Anspruch 9,
**dadurch gekennzeichnet,**
**dass** eine erste, backbordseitige Propeller-Antriebseinrichtung (3; 103) mit der Backbord-Tragfläche (23; 123) oder der Backbord-Verbindungsfläche (125) verbunden oder verbindbar ist und
**dass** eine zweite, steuerbordseitige Propeller-Antriebseinrichtung (4; 104) mit der Steuerbord-Tragfläche (24; 124) oder der Steuerbord-Verbindungsfläche (126) verbunden oder verbindbar ist.

11. Hilfstragflügeleinrichtung nach einem der vorhergehenden Ansprüche,
**dadurch gekennzeichnet,**
**dass** die Tragflächen (121, 122, 123, 124) am Rumpfadapter (120) um eine zur Gierachse z parallele Tragflächenschwenkachse schwenkbar angeordnet sind.

12. Hilfstragflügeleinrichtung nach einem der vorhergehenden Ansprüche,
**dadurch gekennzeichnet,**
**dass** die jeweilige obere Tragfläche (123, 124) an einer Oberseite des Rumpfadapters (120) schwenkbar gelagert ist und dass die jeweilige untere Tragfläche (121, 122) an einer Unterseite des Rumpfadapters (120) schwenkbar gelagert ist.

13. Unbemanntes Fluggerät mit einem Flugkörper (1) und einer Hilfstragflügeleinrichtung (2) nach einem der vorhergehenden Ansprüche.
